Europäisches Patentamt

European Patent Office

Office européen des brevets

(11) Veröffentlichungsnummer : **0 335 203 B1**

(12) **EUROPÄISCHE PATENTSCHRIFT**

(45) Veröffentlichungstag der Patentschrift :
05.08.92 Patentblatt 92/32

(51) Int. Cl.⁵ : **C09K 11/80, H01J 61/44**

(21) Anmeldenummer : **89104826.6**

(22) Anmeldetag : **17.03.89**

(54) **Leuchtstoff, insbesondere zur Verwirklichung von Quecksilberdampf-Entladungslampen sowie Quecksilberdampf-Entladungslampe.**

(30) Priorität : **28.03.88 HU 153288**

(43) Veröffentlichungstag der Anmeldung :
**04.10.89 Patentblatt 89/40**

(45) Bekanntmachung des Hinweises auf die
Patenterteilung :
**05.08.92 Patentblatt 92/32**

(84) Benannte Vertragsstaaten :
**AT DE NL SE**

(56) Entgegenhaltungen :
**EP-A- 0 209 942
DE-A- 2 624 898
US-A- 4 241 276
CHEMICAL ABSTRACTS, Band 72, Nr. 26,
1970, Seite 357, Nr. 137421u, Columbus, Ohio,
US; G. SZABO et al.: "Single and mixedrare
earth aluminates. New preparation method,
structural modifications, and luminescence
properties", & INFLUENCE CHANGEMENTS-
PHASE PROP. PHYS. CORPS SOLIDES 1970,
85-99**

(73) Patentinhaber : **TUNGSRAM
Részvénytársaság
Váci ut. 77
H-1340 Budapest IV (HU)**

(72) Erfinder : **Kinczel, Peter, Dipl.-Ing.
Dallos I. u. 13.
Budapest IV (HU)**
Erfinder : **Balázs, Lászl , Dipl.-Chem.
Visegrádi u. 91/b
Budapest XIII (HU)**
Erfinder : **Saj , Gábor, Dipl.-Chem.
Dallos I. u. 13.
Budapest IV (HU)**

(74) Vertreter : **Patentanwälte Viering & Jentschura
Steinsdorfstrasse 6 Postfach 22 14 43
W-8000 München 22 (DE)**

## Beschreibung

Die Erfindung betrifft einen Leuchtstoff, insbesondere zur Verwirklichung von Quecksilberdampf-Entladungslampen sowie eine einen Leuchtstoff auf einer der Gasentladung zugekehrten Oberfläche enthaltende Niederdruck- oder Hochdruck-Quecksilberdampf-Entladungslampe, wobei der Leuchtstoff eine unter Einwirkung einfallender optischer Strahlung im roten Bereich lumiszierende erste Komponente sowie eine unter Einwirkung einfallender optischer Strahlung im Bereich von 520 bis 560 nm lumiszierende, durch dreiwertiges Zerium aktivierte Komponente mit Yttriumaluminat-Granat mit der Zusammensetzung $Y_{3-a}Ce_aAl_5O_{12}$ beinhaltet.

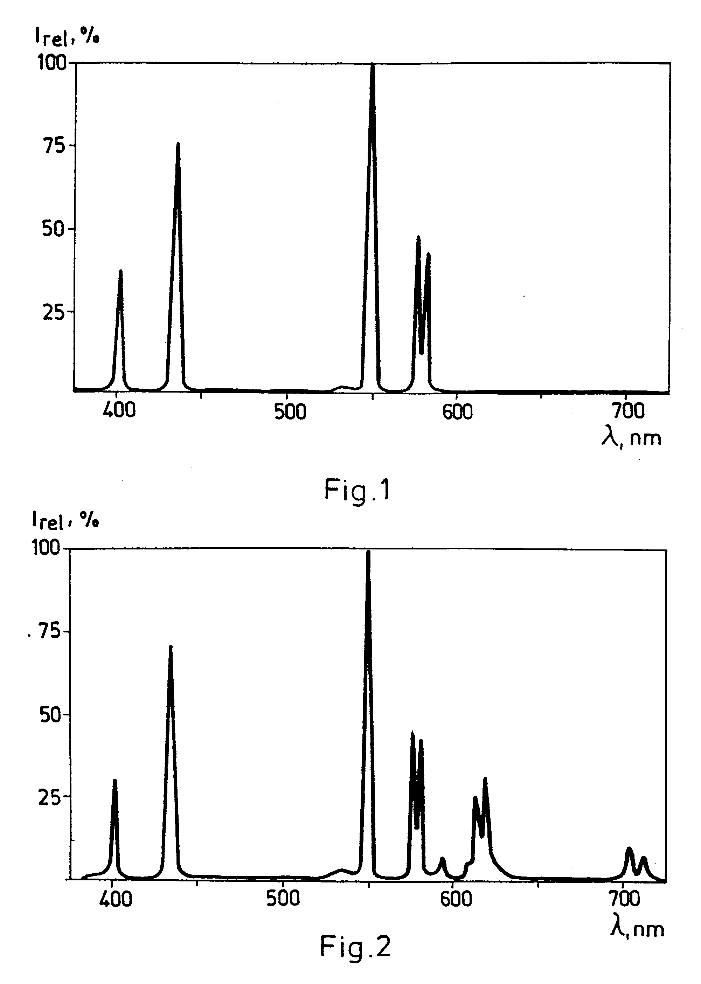

Die Gasentladungslampen und insbesondere die das Quecksilberdampf enthaltenden Entladungslampen sind schon seit längerer Zeit bekannt und finden breite Verwendung bei den äußeren Belichtungsaufgaben. Dabei ist das Quecksilber die wichtigste Quelle der sichtbaren optischen Strahlung, wobei unter den Bedingungen der Gasentladung die sichtbare Strahlung in erster Linie in den Wellenbereichen der gelben und grünen (von 546 bis 577-579 nm) sowie der blauen und violetten (von 435 bis 404, 407 nm) Strahlung entsteht , wie es dem in Figur 1 dargestellten Spektrum der optischen Strahlung entnommen werden kann. Deswegen ist die Farbenwiedergabe derartiger Lichtquellen nicht günstig.

Zwecks Lösung des Problems der Farbenwiedergabe wird die Innenfläche der Quecksilberdampf-Entladungslampe mit einer Schicht eines Leuchtstoffes bedeckt, welcher zur Verbesserung des Spektrums des ausgestrahlten Lichtes dient. Die Leuchtstoffschicht absorbiert einen Teil der ultravioletten Strahlung der im Quecksilberdampf zustandekommenden Entladung und bewirkt die Transformation dieser Strahlung in den Zellenbereich des roten Lichtes, d.h. es wird die rote Farbe dem ausgestrahlten Licht durch den Leuchtstoff zugemischt.

Bei den Hochdruck-Quecksilberdampf-Entladungslampen bedeckt die Leuchtstoffschicht die innere Oberfläche eines äußeren Kolbens, in dem das Entladungsgefäß angeordnet ist. Bei den Niederdruck-Quecksilberdampf-Entladungslampen dagegen ist im allgemeinen kein äußerer Kolben vorhanden, sondern das Entladungsgefäß kann selbst als Lichtquelle eingesetzt werden.

Nach der US-A-2 748 303 wird die Innenfläche des äußeren Kolbens einer Hochdruck-Quecksilberdampf-Entladungslampe mit einer Magnesium-Fluorgermanat-Schicht bedeckt, wobei als Aktivierungsmittel das Mangan dient. Der auf Germanat basierende Leuchtstoff ist nicht genügend stabil. Deswegen wurde in der US-A-3 569 752 von Levin et al . die Verwendung von mit dreiwertigem Europium aktiviertem Yttriumvanadat oder Yttriumvanadatphosphat vorgeschlagen. Derart kann das Spektrum auf stabile Weise günstig beeinflußt werden. In Figur 2 wurde das Spektrum des durch eine Hochdruck-Quecksilber-Gasentladungslampe ausgestrahlten Lichtes dargestellt, falls der äußere Kolben vom innen mit einem Korrekturbelag versehen ist, welcher mit dreiwertigem Europium-Eu(III) aktiviertes Yttriumvanadat enthält.

Die derart erhaltenen Farbenparameter einer Quecksilberdampf-Entladungslampe sind schon im Vergleich zum durch die Entladung ausgestrahlten Licht verbessert, jedoch bedürfen jene noch weiterer Versuche zwecks Annäherung an die ideale Farbenwiedergabe. Die Bestrebungen sind in zwei Richtungen zu sehen.

1) Bei den bekannten Niederdruck-Quecksilberdampf-Entladungslampen, d.h. bei den Leuchtröhren verschiedener Gestaltungen, wird der Leuchtstoffbelag als ein Gemisch von Leuchtstoffen ausgebildet, wobei Komponenten zur Ausstrahlung von blauem, grünem und roten Licht vorgesehen sind. Eine derartige Lösung kann zum Beispiel in der US-A-4 431 942 aufgefunden werden, in der insbesondere für Hochdruck-Quecksilberdampf-Entladungslampen ein Gemisch vorgeschlagen wurde, bei welchem mit zweiwertigem Europium aktiviertes Strontium-Chlorapatit oder Barium-Magnesiumaluminat (strahlt im Bereich von 440 bis 470 nm in violetter bis blauer Farbe), mit zweiwertigem Kupfer aktiviertes Zinksulfid oder mit dreiwertigem Zerium aktiviertes Kalziumsulfid oder mit dreiwertigem Zerium und dreiwertigem Terbium aktiviertes Kalzium-Magnesiumaluminat (strahlt im Bereich von 520 bis 560 nm in gelber bis grüner Farbe) und mit dreiwertigem Europium aktiviertes Yttriumvanadat oder Yttriunvanadatphosphat (strahlt im Bereich von 605 bis 630 nm in roter Farbe) vorgeschrieben sind. Nach der Beschreibung des US Patentes beträgt die Farbentemperatur derartiger Entladungslampen von 2700 bis 2900 K nach Einstellung. In der Praxis wird jedoch diese Lösung nicht verwendet.

2) Ein Gemisch aus zwei Leuchtstoffen kann auch bei den Hochdruck-Quecksilberdampf-Entladungslampen verwendet werden. Eine der Komponenten derartiger Gemische strahlt im Bereich der roten Farbe, sie enthält im Allgemeinen das schon oben erwähnte, mit dreiwertigem Europium aktivierte Yttriumvanadat oder Yttriumvanadatphosphat. Die andere Komponente absorbiert die von der im Quecksilberdampf ablaufenden Entladung erzeugte Strahlung von 435 nm Wellenlänge und unter ihrer Einwirkung leuchtet es im Bereich von der gelben bis zur grünen Farbe - sie besteht aus mit dreiwertigem Zerium aktiviertem und Granatstruktur aufweisenden Yttriuraluminat. Ein solcher Leuchtstoff wurde von M. Hoffman in der US-A-4 034 257 oder von Wyner et al. in der US-A-4 241 276 geoffenbart . Nach der US-A-4 034 257 wird als in rotor Farbe lumiszierender Leuchtstoff das schon bekannte, mit dreiwertigem Europium aktivierte Yttriumvanadat oder Yttriumvanadatphosphat vorgeschlagen und dazu Yttriumaluminat von Granatstruktur, und mit Zerium aktiviert, wird zugemischt. Die Menge der zugemischten Komponente beträgt etwa 5 bis 30 % der Gesamtmasse des Leuchtstoffes. Die Zusammensetzung des als Zusatzkomponente geltenden Leuchtstoffes kann mit der Formel

$$Y_{3-x}Ce_xAl_5O_{12}$$

gekennzeichnet werden, wobei vorteilhaft x zwischen 0,004 und 0,02 liegt: $0,004<x<0.02$.

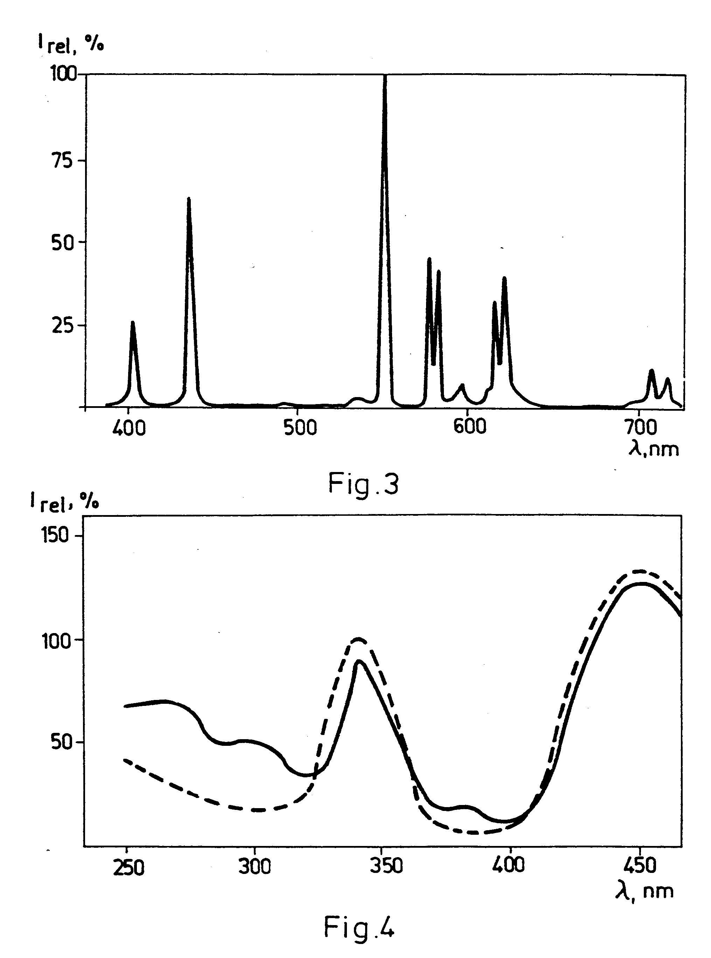

Nach der zweiten Patentschrift wird die Menge des zugemischten Leuchtstoffes so bestimmt, daß jene etwa 20 bis 40 % in der Gesamtmasse des Leuchtstoffes ausmacht. Derart kann die Farbentemperatur aufrechterhalten werden und gleichzeitig wird eine Verbesserung der lm/W-Ausbeute notiert. Das Spektrum des durch eine solche Quecksilberdampf-Entladungslampe erzeugten Lichtes ist in Figur 3 zu sehen. Der Zusatzleuchtstoff, i.e. das mit dreiwertigem Zerium aktivierte Aluminatgranat, erfüllte eine doppelte Aufgabe. Zuerst absorbiert jener die blaue Strahlung von 435 nm Wellenlänge der Entladung und derart verschiebt er den Farbpunkt der Lampe auf der Linie des schwarzen Körpers in Richtung niedrigerer Farbentemperaturen, was die Farbenwiedergabe der Lampe verbessert. Andererseits erfolgt die Erregung des Stoffes unter Einwirkung der absorbierten Strahlung und Lumineszenz mit gelbem Licht von etwa 560 nm Wellenlänge. Die Absorption ist den dreiwertigen Zeriumionen zu danken, welche im Kristallgitter eingebaut worden sind. Das bedeutet, daß die Absorption des blauen Lichtes bis zu einer bestimmten Grenze proportional zu der Anzahl der vorhandenen Zeriumionen veränderlich ist. Die untere Grenze der Anzahl der Zeriumionen ist durch das Auftreten des Absorptionsprozesses selbst bestimmt. Die Absorption kann jedoch nicht endlos intensiviert werden, d.h. oberhalb einer bestimmten Menge können die Zeriumionen schon im Kristallgitter eingebaut sein, so daß das Zerium eine gesonderte Phase bildet. Die untere Grenze der zur Vermeidung einer gesonderten Phase notwendigen Konzentration ist die obere Grenze des die Absorption sicherstellenden Vorhandenseins des Zeriums. Das Auftreten einer $CeAlO_3$ Phase wurde schon im Jahre 1973 mitgeteilt (Journ. of El.Chem.Soc., 1973, 69, S. 278) und die dazu notwendigen Zeriumkonzentrationen wurden bestimmt. Die Zeriumaluminatphase ist eindeutig schädlich, und zwar auch schon bei niedrigsten Mengen. In der HU-A-194 649 (dieses Patentdokument entspricht der NL-Anmeldung von N.V. Philips Gloeilampenfabrieken, Eindhoven Nr. 85'02025) ist zu lesen, daß bei den Niederdruck-Quecksilberdampf-Entladungslampen die Zeriumkonzentration die obere Grenze von 0,15 mol Ce(III) pro mol Granat nicht überschreiten darf, da widrigenfalls fremde Phasen erscheinen können. Das Gesagte betrifft auch das Lantan, dessen Ionen mit Schwierigkeit ebenfalls in das Granatgitter eingeführt werden können und oft kann die schädliche Wirkung der fremden $LaAlO_3$-Phase bestimmt werden, wie es den Untersuchungen zu entnehmen ist.

Der Erfindung liegt die Erkenntnis zugrunde, daß im Vergleich zu den bekannten stöchiometrischen Verhältnissen das Aluminium im Überschuß eingesetzt werden soll. Das bedeutet, das Verhältnis des Aluminiums zu den seltenen Erdmetallen soll im Rohgemisch der Herstellung des Leuchtstoffes so bestimmt werden, daß die Zusammensetzung

$$Y_{3-a}Ce_aAl_5O_{12} \ + \ xLa_bCe_{1-b}Al_{11}O_{18}$$

gewährleistet wird, wobei die folgenden Wertbereiche sicherzustellen sind:

$$0<x<2,$$
$$0,0003<a<0,1,$$
$$0<b<1.$$

Die Untersuchungen beweisen, daß in diesem Falle weder die $LeAl_3$- noch die $CeAlO_3$-Phase entsteht und nach Glühung weist der Leuchtstoff eine gemischte Struktur auf: die Analyse nach der Kartonnummer ASTM PDF 8-178 zeigt das Vorhandensein der Granatstruktur und nach der Kartonnummer ASTN PDF 33-699 kann durch eine röntgendiffraktometrische Analyse auch eine hexagonale Phase entdeckt werden. Die Menge der letzteren ist vorteilhaft zwischen 5 und 70 Gew.% in Bezug zur Masse des Granats.

Es ist unerwartet, daß der im Allgemeinen zweiphasige Leuchtstoff der Erfindung einen deutlich höheren Wirkungsgrad im ultravioletten Bereich aufweist als das mit dreiwertigem Zerium aktivierte Yttriumaluminat-Granat. Das Wesentliche der oben angeführten Erkenntnis kann im Folgenden zusammengefaßt werden: in den Entladungslampen, und insbesondere bei den Niederdruck- und Hochdruck-Quecksilber-Entladungslampen soll der bekannte, im roten Bereich luminiszierende Leuchtstoff, insbesondere das mit dreiwertigem Europium aktivierte Yttriumvanadat oder Yttriumvanadatphosphat mit einem auf Aluminat basierenden, durch dreiwertiges Zerium aktiviertes Seltenerdmetallaluminat enthaltenden Leuchtstoff ergänzt werden, welcher in gelben und grünen Lichtbereichen luminiszieren kann und in der Rohmischung Aluminium im Überschuß zu den stöchiometrischen Verhältnissen des als Granat strukturierten Aluminats enthält. Derart kann eine Struktur erhalten werden, in der eine Phase eine Granatstruktur und eine andere Phase eine hexagonale Struktur aufweist. Ein solcher Leuchtstoff bewirkt die Erhöhung des UV-Wirkungsgrades der Entladungslampe.

Aufgrund der Erkenntnis wurde die Aufgabe der Erfindung gestellt: es sind ein Leuchtstoff und eine Quecksilberdampf-Entladungslampe mit erhöhtem spektralem Wirkungsgrad zu schaffen.

Zur Lösung der gestellten Aufgabe wurde ein Leuchtstoff, insbesondere zur Verwirklichung von Quecksilberdampf-Entladungslampen erarbeitet, welcher eine unter Einwirkung einfallender optischer Strahlung im roten Bereich luminiszierende erste Komponente sowie eine unter Einwirkung einfallender optischer Strahlung im Bereich von 520 bis 560 nm luminiszierende, durch dreiwertiges Zerium aktivierte zweite Komponente mit Yttriumaluminat-Granat der Zusammensetzung $Y_{3-a}Ce_aAl_5O_{12}$ enthält, wobei erfindungsgemäß die zweite Komponente in einem Gemisch eine erste Phase aus dem Yttriumaluminat-Granat, wobei a im Bereich von $0{,}0003<a<0{,}1$, vorteilhaft $0{,}003<a<0{,}1$ liegt, und im Bezug zur ersten Phase in einer unterhalb der zweifachen verbleibenden Menge eine zweite Phase aus einem Aluminat hexagonaler Kristallstruktur der Zusammensetzung $nLa_bCe_{1-b}Al_{11}O_{18}$ enthält, worin b im Bereich von $0{,}1<b<1$, vorteilhaft $0{,}1<b<1$ liegt, wobei die zweite Phase zumindest in einer durch eine röntgendiffraktometrische Analyse beweisbaren Menge vorhanden ist. Es ist auch vorteilhaft, wenn die Menge der zweiten Phase unterhalb der Menge der ersten Phase verbleibt und in der ersten Phase höchstens 1 % der Yttriumatome durch Lantanatome ersetzt sind.

Zur Lösung der gestellten Aufgabe wurde auch eine Quecksilberdampf-Entladungslampe geschaffen, welche zumindest zwei Elektroden zum Hervorrufen einer Gasentladung in einem geschlossenen, eine zumindest aus Quecksilber als Metallzusatz und einem Edelgas bestehende Füllung aufnehmenden Gasentladungsraum, ein den Gasentladungsraum umgebendes, hermetisch abgeschlossenes äußeres Gefäß - dies ist ein Entladungsgefäß bei den Niederdruck-Entladungslampen - und einen äußeren Kolben zur Aufnahme des Entladungsgefäßes bei den Hochdruck-Entladungslampen aufweist, wobei die Innenfläche des äußeren Gefäßes mit einer Schicht eines Leuchtstoffes bedeckt ist, welcher eine erste, unter Einwirkung einfallender optischer Strahlung im roten Bereichluminiszierende Komponente sowie eine zweite, unter Einwirkung einfallender optischer Strahlung im Bereich von 520 bis 560 nm, daher im vom grünen hits gelben Licht sich ausbreitenden Bereich luminiszierende, durch dreiwertiges Zerium aktivierte Komponente mit Yttriumaluminat-Granat der Zusammensetzung $Y_{3-a}Ce_aAl_5O_{12}$ enthält, und erfindungsgemäß die zweite Komponente des Leuchtstoffes in einem Gemisch eine erste Phase aus dem Yttriunaluminat-Granat, worin a einen Wert im Bereich von $0{,}0003<a<0{,}1$, vorteilhaft $0{,}003<a<0{,}1$ hat, und in einer unterhalb der zweifachen der ersten Phase verbleibenden Menge eine zweite Phase aus einem Aluminat hexagonaler Struktur der Zusammensetzung $La_bCe_{1-b}Al_{11}O_{18}$ enthält, worin b einen Wert im Bereich von $0<b<1$, vorteilhaft von $0{,}1<b<1$ hat, und wobei die zweite Phase zumindest in einer durch eine röntgendiffraktometrische Analyse beweisund entdeckbaren Menge vorhanden ist.Insbesondere kann bei den Hochdruck-Quecksilberdampf-Entladungslampen als erste Komponente das an sich bekannte und mit dreiwertigem Europium aktivierte Yttriumvanadat oder Yttriumvanadatphosphat günstig verwendet werden und in diesem Falle macht die Menge der zweiten Komponente im Allgemeinen von 5 bis 30 % der Masse des Leuchtstoffes aus. Durch Einsetzen des vorgeschlagenen Leuchtstoffes kann der Wirkungsgrad von Quecksilberdampf-Entladungslampen aller Arten verbessert werden.

Die Erfindung wird nachstehend aufgrund von als Beispiele dargestellten Ausführungsformen, mit Hinweis auf die Zeichnung näher erläutert. Wie schon erwähnt, stellen

FIGUR 1 das Spektrum einer keinen Leuchtstoff enthaltenden Hochdruck-Quecksilberdampf-Entladungslampe,

FIGUR 2 das Spektrum einer mit einem $YVO_4{:}Eu^{3+}$ Leuchtstoff bedeckten bekannten Hochdruck-Quecksilberdampf-Entladungslampe, und

FIGUR 3 das Spektrum einer mit einem das erwähnte Granat enthaltenden Leuchtstoff verwirklichten Hochdruck-Quecksilberdampf-Entladungslampe verminderter Farbentemperatur dar und daran schließen sich weitere Figuren an.

FIGUR 4 zeigt das Erregungsspektrum des erfindungsgemäß vorgeschlagenen zweiphasigen, Lantan enthaltenden Leuchtstoffes (——) und das des im Wesentlichen ohne Lantan verwirklichten bekannten Yttriumgranats (- - - ) und

FIGUR 5 ist eine schematische Darstellung einer Hochdruck-Quecksilberdampf-Entladungslampe.

Der erfindungsgemäße Leuchtstoff enthält immer eine zweiphasige Mischung von Aluminaten, unter denen eine Phase in der Kristallstruktur zum Granatsystem und die andere zum hexagonalen System gehören. Die Herstellung des erfindungsgemäß vorgeschlagenen Leuchtstoffes wird folgendermaßen verwirklicht.

Im ersten Schritt des Verfahrens soll eine Rohmischung von Aluminaten nach der allgemeinen Strukturformel

$$Y_{3-a}Ce_aAl_5O_{12} + x\,La_bCe_{1-b}Al_{11}O_{18} \qquad (1)$$

vorbereitet werden, wobei das erste Glied, d.h. das Yttrium-Aluminat Granat nach der Strukturformel $Y_{3-a}Ce_bAl_5O_{12}$, wobei das dreiwertige Zerium zur Aktivierung vorgesehen ist, schon früher als Leuchtstoff bekannt war, und das zweite Glied, d.h. das Lantan-Zerium-Aluminat nach der Strukturformel $La_bCe_{1-b}Al_{11}O_{18}$ die neue Komponente bedeutet. Die Rohstoffe sollen bei der Zusammensetzung der Rohmischung in solchen Mengen verwendet werden, daß die obige allgemeine Strukturformel (1) nach der Verarbeitung der Rohstoffe gelten wird, und dabei die folgenden Werte des Koeffizienten x sowie der Indices a und b gewährleistet werden sollen:

0<x<2, vorteilhaft 0<x<1,
0,0003<a<0,1 vorteilhaft 0,003<a<0,1,
0<b<1, vorteilhaft 0,1<b<1.

Bei dem Zusammenstellen der obigen Rohmischung als Rohstoffe werden die Oxide der zur Verwendung kommenden Metalle oder solche Verbindungen ausgewählt, welche unter Einwirkung höherer Temperaturen in Oxiden umgewandelt werden. Ein Flußmittel, insbesondere die Borsäure, kann auch eingesetzt werden. Die Mengen des Flußmittels werden gemäß den allgemeinen Prinzipien der Leuchtstoffherstellung bestimmt.

Nach dem Zusammenstellen der Rohstoffe und derartigen Vorbereitung der Rohmischung wird die letztere homogenisiert und gemahlen. Das gemahlene Material wird danach der Einwirkung erhöhter Temperatur ausgesetzt, d.h. geglüht. Das Glühen erfolgt im Allgemeinen bei Temperaturen oberhalb 1200 °C und in einer Atmosphäre von niedriger reduzierender Aktivität.

Nach dem Abglühen wird die Mischung zerkleinert und gesiebt. Das so erhaltene Pulver kann auf an sich bekannte Weise zur Vorbereitung des Leuchtstoffbelages bei den Hochdruck- oder Niederdruck-Quecksilberdampf-Entladungslampen verwendet werden. Offensichtlich, wenn es erforderlich ist, ist der vorgeschlagene Leuchtstoff auch in anderen Anlagen verwendbar, wobei eine optische Strahlung im Bereich von 520 bis 560 nm durch optische Erregung zu erzeugen ist.

Die Methode des Aufbringens des Leuchtstoffes ist an sich ebenfalls bekannt und es wird insbesondere das elektrostatische Verfahren empfohlen. Die Herstellung der Hochdruck- oder Niederdruck-Quecksilberdampf-Gasentladungslampen bildet nicht den Gegenstand vorliegender Erfindung; der einzige Unterschied zu den bekannten Methoden ist in dem verwendeten Leuchtstoff zu finden.

Die Mischung, welche nach dem obigen Verfahren vorbereitet wird, kann mit dem bekannten weiteren Komponenten vermischt werden. So entsteht ein Leuchtstoff, welcher im Vergleich mit den bekannten Leuchtstoffen bessere Parameter bei der Umwandlung der ultravioletten (UV) Strahlung zeigt, und insbesondere bei der Prüfung mit einem im Quecksilberdampf entstehenden Entladungsbogen. Diese Tatsache ist teilweise in der FIGUR 4 dargestellt,wobei die Linien die relative Intensität des luminiszierenden Leuchtstoffes in Abhängigkeit von der Wellenlänge Lambda (in nm) repräsentiert; die gestrichelte Linie in FIGUR 4 betrifft die bekannten Leuchtstoffsysteme, wobei eine der Komponenten aus dem Yttrium-Aluminat-Granat besteht. Die kontinuierliche Linie stellt demgegenüber denselben Parameter des erfindungsgemäß verwirklichten Leuchtstoffes dar, welcher die hexagonale Kristallphase nach der Strukturformel $La_bC_{1-b}Al_{11}O_{18}$ enthält.

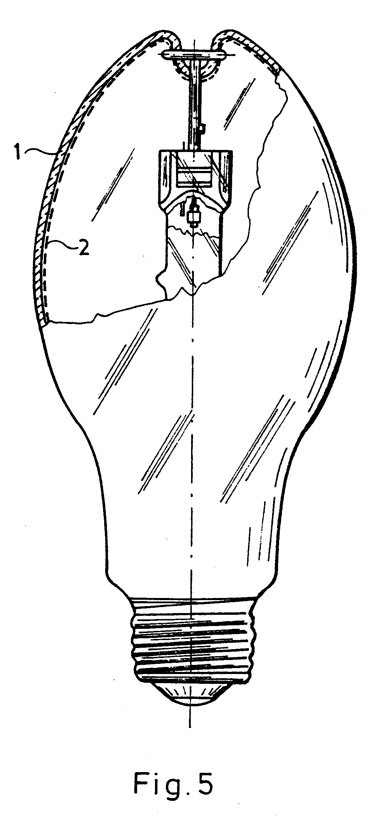

Bei den Hochdruck-Quecksilberdampf-Gasentladungslampen (FIGUR 5) wird, wie bekannt ein äußerer Kolben 1 zur Bestimmung eines ein inneres Entladungsgefäß aufnehmenden inneren Raumes verwendet. Das Entladungsgefäß nimmt einen Metallzuschlag und darin das Quecksilber sowie ein Edelgas auf. Diese Füllung ist ebenfalls an sich bekannt. Der äußere Kolben 1 ist vakuumdicht geschlossen und mit einem Sockel versehen, wodurch die elektrische Speisung des Entladungsgefäßes gewährleistet werden kann.

Der äußere Kolben 1 ist auf der Innenseite mit einem Leuchtstoffbelag 2 versehen, welcher im Allgemeinen aus einer oder zwei Schichten besteht. Die Menge des Leuchtstoffes im Leuchtstoffbelag 2 macht von etwa 250 bis 300 mg/cm² aus. In der ersten, die Oberfläche des äußeren Kolbens bedeckenden Schicht wird immer eine Mischung verwendet, welche eine Komponente aus dem mit dreiwertigem Zerium aktivierten Yttrium-Aluminat des Granat-Kristallsystems nach der Strukturformel $Y_{3-a}Ce_aAl_5O_{12}$ und aus dem gemischten Seltene-Erdmetall-Aluminat nach der Strukturformel $La_bCe_{1-b}Al_{11}O_{18}$ aufweist und zumindest eine weitere, unter Einwirkung einfallender optischer Strahlung im roten Bereich luminiszierende Komponente enthält. Die letztere kann das früher erwähnte und mit dreiwertigem Europium akvierte Yttrium-Vanadat oder Yttriur-Vanadat-Phosphat sein. Soll eine zweite Schicht noch erforderlich sein, so besteht sie aus dem im roten Bereich luminiszierenden Stoff, zum Beispiel dem obenerwähnten Vanadat. Zur Aufbringen des Leuchtstoffbelags 2 wird insbesondere das elektrostatische Verfahren empfohlen, welches bei der Herstellung von Gasentladungslichtquellen bekannt ist.

Die Hochdruck-Quecksilberdampf-Entladungslampe wurde nach Aufbringen des Leuchtstoffbelags 2, wie in FIGUR 5 sichtbar ist, zwecks Bestimmung der wichtigsten Arbeitsparameter, Untersuchungen und Prüfungen hergerichtet. In Abhängigkeit von der Leistung der Lichtquelle konnten die folgenden Wertbereiche festgestellt werden: die Farbentemperatur lag im Bereich von 3100 bis 3400 K, der Farbenwiedergabeindex (Ra) bei 50 bis 57 und die Lichtausbeute bei 52 bis 58 lm/W. Es ist hier zu betonen, daß die vorteilhaft hohen Werte der Farbentemperatur und des Farbenwiedergabeindexes mit den die mit bekannten Leuchtstoffen verwirklichten Quecksilberdampf-Gasentladungslampen kennzeichnenden Werten gleich oder nicht deutlich höher sind; demgegenüber ist die Lichtausbeute deutlich besser als die der bekannten Lichtquellen dieser Art.

Der folgende Vergleich (siehe Tafel 1) beweist weiter, daß die Hochdruck-Quecksilberdampf-Entladungslampen mit dem vorgeschlagenen neuartigen Leuchtstoff eine Verbesserung auch im Wert des relativen Lichtstroms gewährleisten, wenn aus diesem Leuchtstoff, wie in FIGUR 5 dargestellt ist, ein ein-oder zweischichtiger Belag aufgetragen ist.Der Vergleich wurde mit der Entladungslampe gleicher Art gezogen, wobei der Leuchtstoffbelag 2 ohne die Komponente mit hexagonaler Kristallstruktur, d.h. die mit der Strukturformel $La_bCe_{1-b}Al_{11}O_{18}$ gekennzeichnete Komponente, hergestellt wurde, d.h. das mit dreiwertigem Zerium aktivierte Yttrium-Aluminat-Granat mit der hexagonalen Phase nicht ergänzt wurde.

TAFEL 1

| Leuchtstoff | Relativer Lichtstrom, $I_{rel}$, % |
|---|---|
| mit der erfindungsgemäß vorgeschlagenen Zusammensetzung | 104 |
| bestehend aus bekanntem "Yttrium -Aluminat-Granatsystem (von Sylvania, Typ 251 ) | 100 |

Der Leuchtstoff mit der erfindungsgemäß vorgeschlagenen Zusammensetzung wird weiter aufgrund von als Beispiele dargestellten Ausführungsformen der zweiphasigen, d.h. aus dem Granat sowie dem Teil hexagonaler Struktur bestehenden Komponente näher erläutert. Offensichtlich ist die Erfindung auf diese Beispiele nicht beschränkt, die zur besseren Darstellung des Wesens der Erfindung dienen.

BEISPIEL 1

In eine Kugelmühle mit Porzellankugeln werden die folgenden Rohstoffe (Metalloxide und Borsäure) in den angegebenen Mengen eingeführt:

$$
\begin{array}{lll}
16,5 & \text{g} & Y_2O_3 \\
0,815 & \text{g} & La_2O_3 \\
0,861 & \text{g} & CeO_2 \\
16,3 & \text{g} & Al_2O_3 \\
0,345 & \text{g} & H_3BO_3
\end{array}
$$

Die oben angegebenen Rohstoffmengen bestimmen die folgenden Werte des Koeffizienten x und der Indices a und b in der allgemeinen Strukturformel (1): x = 0,125, a 0,075 und b = 0,1.

Die Rohstoffe in den obigen Mengen wurden miteinander vermischt, dann eine Stunde hindurch gemahlen und in einem Ofen angeordnet. Im letzteren wurde die Mischung in der Temperatur von 1480 °C zwei Stunden hindurch abgeglüht. Der Innenraum des Ofens war mit einer $N_2$-Atmosphäre gefüllt, wobei der Stickstoff mit 3 Vol.% Wasserstoff ergänzt worden war.

Nach dem Glühen wurde die Mischung zerkleinert und gesiebt. Aus der Mischung mit gewünschter Granulometrie wurde der Leuchtstoff, welcher die Zusammensetzung nach der Erfindung zeigte, zusammengestellt und zur Ausbildung eines Leuchtstoffbelags einer Quecksilberdampf-Entladungslampe verwendet .

Der durch das im Beispiel 1 geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen Phase im Gesamtvolumen 13 Vol.% betrug.

BEISPIEL 2

In eine Kugelmühle mit Porzellankugeln werden die folgenden Rohstoffe (Metalloxide und Borsäure) in den

angegebenen Mengen eingeführt.

| 16,5 | g | $Y_2O_3$ |
|---|---|---|
| 1,63 | g | $La_2O_3$ |
| 1,08 | g | $CeO_2$ |
| 19,8 | g | $Al_2O_3$ |
| 0,390 | g | $H_3BO_3$ |

Die obenangegebenen Rohstoffmengen bestimmen die folgenden Werte des Koeffizienten x und der Indices a und b in der allgemeinen Strukturformel (1): x = 0,250, a = (0,075 und b = 0,2.

Die obige Rohmischung wurde gemäß dem Beispiel 1 verarbeitet, und ein Leuchtstoff wurde hergestellt.

Der durch das geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen kristallinen Phase im Gesamtvolumen 24 Vol.% betrug.

BEISPIEL 3

In eine Kugelmühle mit Porzellankugeln werden die folgenden Rohstoffe (Metalloxide und Borsäure) in den angegebenen Mengen eingeführt:

| 16,5 | g | $Y_2O_3$ |
|---|---|---|
| 2,44 | g | $La_2O_3$ |
| 1,29 | g | $CeO_2$ |
| 23,3 | g | $Al_2O_3$ |
| 0,435 | g | $H_3BO_3$ |

Die oben angegebenen Rohstoffmengen bestimmen die folgenden Werte des Koeffizienten x und der Indices a und b in der allgemeinen Strukturformel (1): x = 0,375, a = 0,075 und b = 0,3.

Die obige Rohmischung wurde gemäß dem Beispiel 1 verarbeitet und ein Leuchtstoff wurde hergestellt.

Der durch das im Beispiel 1 geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen Phase im Gesamtvolumen 31 Vol.% betrug.

BEISPIEL 4

In eine Kugelmühle mit Porzellankugeln werden die folgenden Rohstoffe (Metalloxide und Borsäure) in den angegebenen Mengen eingeführt:

| 16,5 | g | $Y_2O_3$ |
|---|---|---|
| 3,26 | g | $La_2O_3$ |
| 1,51 | g | $CeO_2$ |
| 26,8 | g | $Al_2O_3$ |
| 0,481 | g | $H_3BO_3$ |

Die oben angegebenen Rohstoffmengen bestimmen die folgenden Werte des Koeffizienten x und der Indices a und b in der allgemeinen Strukturformel (1): x = 0,50, a = 0,075 und b = 0,55.

Die obige Rohmischung wurde gemäß dem Beispiel 1 verarbeitet und ein Leuchtstoff wurde hergestellt.

Der durch das im Beispiel 1 geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen Phase im Gesamtvolumen 38 Vol.% betrug.

BEISPIEL 5

In eine Kugelmühle mit Porzellankugeln werden die folgenden Rohstoffe (Metalloxide und Borsäure) in den angegebenen Mengen eingeführt:

| 16,5 | g | $Y_2O_3$ |
|---|---|---|
| 4,48 | g | $La_2O_3$ |
| 1,83 | g | $CeO_2$ |
| 32,1 | g | $Al_2O_3$ |
| 0,549 | g | $H_3BO_3$ |

Die oben angegebenen Rohstoffmengen bestimmen die folgenden Werte des Koeffizienten x und der Indices a und b in der allgemeinen Strukturformel (1): x =. 0,688, a = 0,075 und b = 0,55.

Die obige Rohmischung wurde gemäß dem Beispiel 1 verarbeitet und ein Leuchtstoff wurde hergestellt.

Der durch das im Beispiel 1 geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen Phase im Gesamtvolumen 46 Vol.% betrug.

BEISPIEL 6

In eine Kugelmühle mit Porzellankugeln werden die folgenden Rohstoffe (Metalloxiden und Borsäure) in den angegebenen Mengen eingeführt:

| 16,5 | g | $Y_2O_3$ |
|---|---|---|
| 5,70 | g | $La_2O_3$ |
| 2,15 | g | $CeO_2$ |
| 37,6 | g | $Al_2O_3$ |
| 0,620 | g | $H_3BO_3$ |

Die oben angebenen Rohstoffmengen bestimmen die folgenden Werte des Koeffizienten x und der Indices a und b in der allgemeinen Strukturformel (1): x = 0,875, a = 0,075 und b = 0,70.

Die obige Rohmischung wurde gemäß dem Beispiel 1 verarbeitet und ein Leuchtstoff wurde hergestellt.

Der durch das im Beispiel 1 geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen Phase im Gesamtvolumen 52 Vol.% betrug.

BEISPIEL 7

In eine Kugelmühle mit Porzellankugeln werden die folgenden Rohstoffe (Metalloxide und Borsäure) in den angegebenen Mengen eingeführt:

| 16,5 | g | $Y_2O_3$ |
|---|---|---|
| 4,07 | g | $La_2O_3$ |
| 2,26 | g | $CeO_2$ |
| 32,1 | g | $Al_2O_3$ |
| 0,550 | g | $H_3BO_3$ |

Die oben angegebenen Rohstoffmengen bestimmen die folgenden Werte des Koeffizienten x und der Indices a und b in der allgemeinen Strukturformel (1): x = 0,688, a = 0,075 und b = 0,50.

Die obige Rohmischung wurde gemäß dem Beispiel 1 verarbeitet, und ein Leuchtstoff wurde hergestellt.

Der durch das im Beispiel 1 geschilderte Verfahren erhaltene Leuchtstoff wurde nachfolgende einer röntgendiffraktometrischen Analyse unterzogen, zwecks Bestimmung der strukturellen Zusammensetzung. Die Analyse bewies, daß der Anteil der hexagonalen Phase im Gesamtvolumen 46 Vol.% betrug.

BEISPIEL 8

In eine Kugelmühle mit Porzellankugeln werden die folgenden Rohstoffe (Metalloxide und Borsäure) in den angegebenen Mengen eingeführt:

$$
\begin{array}{lll}
16,5 & g & Y_2O_3 \\
2,04 & g & La_2O_3 \\
4,41 & g & CeO_2 \\
32,1 & g & Al_2O_3 \\
0,550 & g & H_3BO_3
\end{array}
$$

Die oben angegebenen Rohstoffmengen bestimmen die folgenden Werte des Koeffizienten x und der Indices a und b in der allgemeinen Strukturformel (1): x = 0,688, a =. 0,075 und b = 0,25.

Die obige Rohmischung wurde gemäß dem Beispiel 1 verarbeitet und ein Leuchtstoff wurde hergestellt.

Der durch das im Beispiel 1 geschilderte Verfahren erhaltene Leuchtstoff wurde nachfolgend einer röntgendiffraktometrischen Analyse unterzogen, zwecks Bestimmung der strukturellen Zusammensetzung. Die Analyse bewies, daß der Anteil der hexagonalen Phase im Gesamtvolumen 46 Vol.% betrug.

BEISPIEL 9

Einer Homogenisieranlage wurden 10 g Leuchtstoff nach Beispiel 1 und 90 g Leuchtstoff der Zusammensetzung $YVO_4:Eu^{3+}$ zugeführt und danach homogenisiert. Das so erhaltene Gemisch diente zur Verwendung einer Hochdruck-Quecksilberdampf-Entladunngslampe mit 125 W Leistung nach FIGUR 5. Der äußere Kolben enthielt etwa 950 mg der dargestellten Mischung. Die weiteren Teile der Entladungslampe sind die gleichen, wie bei den bisher hergestellten Entladungslampen.

Die Messungen zeigten, daß die Entladungslampe mit Leuchtstoff nach der Mischung des Beispiels 9 mit einer Lichtausbeute von 54 lm/w , einem Farbenwiedergabeindex von Ra = 55 und einer Farbentemperatur von 3300 K gekennzeichnet werden kann.

BEISPIEL 10

Ein Leuchtstoffgemisch wurde folgendermaßen vorbereitet:
65 Mass.-% mit Europium aktiviertes Yttriumoxid als rote Komponente,
30 Mass.-% mit Terbium aktiviertes Zerium-Magnesium-Aluminat (nach der DE A1 23 53 943 ) oder mit Zerium und Terbium aktiviertes Lantan-Phosphat (nach der US-A 4 423 349 erteilt im Namen von Nichia) als grüne Komponente und
5 Mass.-% A: mit Zerium aktiviertes Yttrium-Aluminat-Granat
oder B: Leuchtstoff nach Beispiel 1.

Das Gemisch nach der Zusammensetzung wurde homogenisiert und zur Vorbereitung eines Leuchtstoffes verwendet. Mit der homogenisierten Mischung wurde ein kompaktes Leuchtrohr von 9 W Leistung hergestellt, wobei die Farbentemperatur 2600 K betrug und die Lichtausbeute
A: 60 lm/W und
B: 61,5 lm/W
ausmacht.

Die Meßergebnisse beweisen es eindeutig, daß der zweiphasige, latanhaltige Leuchtstoff bessere UV Erregbarkeit (bei der Linie von Hg mit Wellenlänge 254 nm) zeigt und derart wird die Lichtausbeute des Leuchtrohrs verbessert, und zwar ohne die Verminderung der Absorption bei der Wellenlänge 435 nm, welche zur Erreichung der niedrigeren Farbentemperatur notwendig ist.

Die nachfolgende Tafel 2 stellt die Anfangszusammensetzung der Rohmischungen nach den Beispielen 1 bis 8, die Werte der relativen Intensität $I_{rel}$ im Bezug zu dem durch dreiwertiges Zerium aktivierten Yttrium-Aluminat- Granat (ein Produkt vom Typ 251 der Firma Sylvania) dar. Die relative Intensität wurde in zwei Wellenlängenbereichen gemessen. Zwecks Vergleich figuriert eine weitere Zeile in der Tafel, worin die Werte für einen Stoff angegeben sind, welcher aufgrund eines Leuchtstoffes ohne die hexagonale Phase entsteht. Die Leuchtstoffe wurden nach den vorigen Beispiele vorbereitet und aufgetragen. In der Tafel enthält die erste Ziffernkolonne die bei Erregung mit der Wellenlänge 366 nm erhältlichen Werte und die zweite Kolonne die Werte für die Erregung im ganzen ultravioletten Bereich, wobei die Quelle der Erregung die Gasentladung in der Atmosphäre des Quecksilberdampfes bildet.

## TAFEL 2

| Beispiel | Die Zusammensetzung der Rohmischung (ohne Borsäure) | Intensität[*], $I_{rel}$ bei 366 nm | im UV |
|---|---|---|---|
| 1 | $Y_{2,925}La_{0,10}Ce_{0,100}Al_{6,38}O_{14,3}$ | 203 | 135 |
| 2 | $Y_{2,925}La_{0,20}Ce_{0,125}Al_{7,73}O_{16,5}$ | 237 | 137 |
| 3 | $Y_{2,925}La_{0,30}Ce_{0,150}Al_{9,13}O_{18,8}$ | 248 | 141 |
| 4 | $Y_{2,925}La_{0,40}Ce_{0,175}Al_{10,5}O_{21,0}$ | 273 | 132 |
| 5 | $Y_{2,925}La_{0,55}Ce_{0,213}Al_{12,6}O_{24,4}$ | 284 | 129 |
| 6 | $Y_{2.925}La_{0,70}Ce_{0,256}Al_{14,6}O_{27,8}$ | 268 | 114 |
| 7 | $Y_{2,925}La_{0,50}Ce_{0,263}Al_{12,6}O_{24,4}$ | 356 | 155 |
| 8 | $Y_{2,925}La_{0,25}Ce_{0,513}Al_{12,6}O_{24,4}$ | 293 | 155 |
| - | $Y_{2,925}Ce_{0,075}Al_5O_{12}$ | 92 | 96 |

[*]In relativen Einheiten bestimmt, gemessen im Vergleich zu einem Leuchtstoff von bekannter Zusammensetzung (Leuchtstoff vom Typ 251 von der Firma Sylvania mit Zusammensetzung nach der letzten Zeile der Tafel)

Das oben angeführte Beispiel betrifft eine Hochdruck-Quecksilberdampf-Entladungslampe. jedoch ist es klar, daß die insbesondere in den Ansprüchen bestimmte Zusammensetzung für einen Leuchtstoff charakteristisch ist, welcher nicht nur bei den Hochdruck-, sondern auch bei den Niederdruck-Quecksilberdampf-Entladungslampen und auch bei anderen Gasentladungslampen verwendet werden kann und dabei die günstigen Parameterwerte gewährleistet.

Der Leuchtstoff mit der erfindungsgemäß vorgeschlagenen Zusammensetzung enthält, wie erwähnt, immer ein zweiphasiges Aluminatsystem mit Granatteil und hexagonalem Teil. Aufgrund der obigen Beschreibung ist es klar, daß viele Äquivalente zu den oben anführten Leuchtstoffen bestimmt werden können, welche mittels herkömmlichen Verfahrensschritten hergestellt werden können. Dasselbe betrifft die Hochdruck- und Niederdruck-Quecksilberdampf-Entladungslampen, welche erfindungsgemäß die vorgeschlagenen Leuchtstoffe enthalten.

**Patentansprüche**

1. Leuchtstoff, insbesondere zur Verwirklichung von Quecksilberdampf-Entladungslampen, welcher eine unter Einwirkung einfallender optischer Strahlung im roten Bereich luminiszierende erste Komponente sowie eine unter Einwirkung einfallender optischer Strahlung im Bereich von 520 bis 560 nm luminiszierende, durch dreiwertiges Zerium aktivierte zweite Komponente mit Yttriumaluminat-Granat der Zusammensetzung $Y_{3-a}Ce_aAl_5O_{12}$ enthält, dadurch gekennzechnet, daß die zweite Komponente in einem Gemisch eine erste Phase aus dem Yttriumaluminat-Granat, worin $0,0003<a<0,1$, und in einer unterhalb der zweifachen der ersten Phase verbleibenden Menge eine zweite Phase aus einem Aluminat hexagonaler Kristallstruktur der Zusammensetzung $La_bCe_{1-b}Al_{11}O_{18}$ enthält, worin $O<b<1$, wobei die zweite Phase zumindest in einer durch eine röntgendiffraktometrische Analyse beweisbaren Menge vorhanden ist.

2. Leuchtstoff nach Anspruch 1, dadurch gekennzeichnet, daß die Menge der zweiten Phase unterhalb der Menge der ersten Phase bleibt und die Indices a und b in den Wertebereichen von $0,003<a<0,1$ und $0,1<b<1$ liegen.

3. Leuchtstoff nach Anspruch 1 oder 2, dadurch gekennzeichnet, daß in der ersten Phase höchstens 1 % der Yttriumatome durch Lantanatome ersetzt sind.

4. Quecksilberdampf-Entladungslampe, welche zumindest zwei Elektroden zum Herbeiführen einer Gasentladung in einem geschlossenen, eine zumindest aus Quecksilber als Metallzusatz und einem Edelgas bestehende Füllung aufnehmenden Raum und ein den Raum der Gasentladung umgebendes, hermetisch abgeschlossenes äußeres Gefäß aufweist, wobei die Innenfläche des äußeren Gefäßes mit einer Leuchtstoffschicht bedeckt ist und der die Leuchtstoffschicht bildende Leuchtstoff eine unter Einwirkung einfallender optischer Strahlung im roten Bereich luminiszierende erste Komponente sowie eine unter Einwirkung einfallender optischer Strahlung im Bereich von 520 bis 560 nm luminiszierende, durch dreiwertiges Zerium aktivierte zweite Komponente mit Yttriumaluminat-Granat der Zusammensetzung $Y_{3-a}Ce_aAl_5O_{12}$ enthält, dadurch gekennzeichnet, daß die zweite Komponente des Leuchtstoffes in einem Gemisch eine erste Phase aus dem Yttriumaluminat-Granat, worin $0,0003<a<0,1$, und in einer unterhalb der zweifachen der ersten Phase verbleibenden Menge eine zweite Phase aus einem Aluminat hexagonaler Kristallstruktur der Zusammensetzung $La_bCe_{1-b}Al_{11}O_{18}$ enthält, worin $O<b<1$, wobei die zweite Phase zumindest in einer durch eine röntgendiffraktometrische Analyse beweisbaren Menge vorhandenes.

5. Quecksilberdampf-Entladungslampe nach Anspruch 4, dadurch gekennzeichnet, daß das äußere Gefäß als ein Entladungsgefäß ausgebildet ist.

6. Quecksilberdampf-Entladungslampe nach Anspruch 4, dadurch gekennzeichnet, daß das äußere Gefäß als ein von einem die Gasentladung aufnehmenden Entladungsgefäß durch einen Raum getrennter äußerer Kolben (1) ausgebildet ist, wobei in der Leuchtstoffschicht (1) die erste Komponente mit dreiwertigem Europium aktiviertes Yttriumvanadat oder Yttriumvanadatphosphat enthält.

7. Quecksilberdampf-Entladungslampe nach einem der Ansprüche 4 bis 6, dadurch gekennzeichnet, daß die Menge der zweiten Phase unterhalb der Menge der ersten Phase des Leuchtstoffes bleibt und die Indices a und b in den Wertebereichen von $0,003<a<0,1$ und $0,1<b<1$ liegen.

8. Quecksilberdampf-Entladungslampe nach einem der Ansprüche 4 bis 7, dadurch gekennzeichnet, daß in der ersten Phase des Leuchtstoffes höchstens 1 % der Yttriumatome durch Lantanatome ersetzt sind.

9. Quecksilberdampf-Entladungslampe nach einem der Ansprüche 6 bis 8, dadurch gekennzeichnet, daß im Leuchtstoff die Menge der zweiten Komponente im Bereich von 5 bis 30 Gew.% liegt.

**Claims**

1. Luminescent substance, in particular for the realization of mercury-vapor discharge lamps, which contains a first component luminescing in the red range under the effect of incident optical radiation, as well as a second component with an yttrium aluminate garnet of the composition $Y_{3-a}Ce_aAl_5O_{12}$ luminescing in the range of 520 to 560 nm under the effect of incident optical radiation and being activated by a trivalent cerium, characterized in that the second component contains in a mixture a first phase of the yttrium aluminate garnet, in which $0,0003<a<0,1$, and a second phase of an aluminate with a hexagonal crystal structure of a composition $La_bCe_{1-b}Al_{11}O_{18}$, in which $0<b<1$, wherein the second phase has an amount remaining below the double of the first phase, and wherein the second phase is present at least in an amount, which is provable by means of an X-ray diffractometrical alanalysis.

2. Luminescent substance as claimed in claim 1, characterized in that the amount of the second phase remains below the amount of the first phase and the indices a and b are in the value ranges of $0,003<a<0,1$ and $0,1<b<1$.

3. Luminescent substance as claimed in claim 1 or 2, characterized in that in the first phase at most 1 % of the yttrium atoms are replaced by lanthanum atoms.

4. Mercury-vapor discharge lamp comprising at least two electrodes for effectuation of a gas discharge in a closed space including a filling consisting of at least mercury as metal admixture and an inert gas, and a hermetically sealed outer vessel surrounding the space of the gas discharge, wherein the inside surface of the outer vessel is coated with a luminescent substance layer and the luminescent substance forming the luminescent substance layer contains a first component luminescing in the red range under the effect of incident optical radiation as well as a second component with an yttrium aluminate garnet of the composition $Y_{3-a}Ce_aAl_5O_{12}$ luminescing in the range of 520 to 560 nm under the effect of incident optical radiation and being activated by a trivalent cerium, characterized in that the second component of the luminescent substance contains in a mixture a first phase of the yttrium aluminate garnet, in which $0,0003<a<0,1$, and a second phase of an aluminate with a hexagonal crystal structure of a composition $La_bCe_{1-b}Al_{11}O_{18}$, in which $0<b<1$, wherein the second phase has an amount remaining below the double of the first phase, and wherein the second phase is present at least in an amount, which is provable by means of an X-ray diffractometrical alanalysis.

5. Mercury-vapor discharge lamp as claimed in claim 4, characterized in that the outer vessel is formed as a discharge vessel.

6. Mercury-vapor discharge lamp as claimed in claim 4, characterized in that the outer vessel is formed as an outer bulb (1) separated from a discharge vessel, in which the gas discharge takes place, by a space, wherein the first component in the luminescent substance layer (2) contains yttrium vanadates or yttrium vanadates phosphate activated by a trivalent europium.

7. Mercury-vapor discharge lamp as claimed in one of the claims 4 to 6, characterized in that the amount of the second phase remains below the amount of the first phase of the luminescent substance and the indices a and b are in the value ranges of $0,003<a<0,1$ and $0,1<b<1$.

8. Mercury-vapor discharge lamp as claimed in one of the claims 4 to 7, characterized in that in the first phase of the luminescent substance at most 1 % of the yttrium atoms are replaced by lanthanum atoms.

9. Mercury-vapor discharge lamp as claimed in one of the claims 6 to 8, characterized in that in the luminescent substance the amount of the second component is in the range of 5 to 30 per cent by weight.

## Revendications

1. Substance luminescente, notamment pour la réalisation d'une lampe à décharge à vapeur de mercure, la substance contenant un premier constituant luminescent dans la gamme rouge sous l'effet d'une irradiation optique, et un deuxième constituant luminescent dans la fourchette de 520 à 560 nm sous l'effet d'une irradiation optique, le deuxième constituant étant activé par du cérium trivalent et comprenant un grenat d'yttrium-aluminate de la composition $Y_{3-a}Ce_aAl_5O_{12}$, la substance étant caractérisée en ce que le deuxième constituant contient dans un mélange une première phase du grenat d'yttrium-aluminate avec $0,0003<a<0,1$ et, en une quantité restant au-dessous du double de la première phase, une deuxième phase d'un aluminate de structure cristalline hexagonale de la composition $La_bCe_{1-b}Al_{11}O_{18}$ avec $0<b<1$, la deuxième phase étant présente au moins en une quantité décelable par une analyse radiodiffractométrique.

2. Substance luminescente selon la revendication 1, caractérisée en ce que la quantité de la deuxième phase reste au-dessous de la quantité de la première phase, les indices a et b étant dans les fourchettes respectives de $0,003<a<0,1$ et $0,1<b<1$.

3. Substance luminescente selon la revendication 1 ou 2, caractérisée en ce que dans la première phase au maximum 1% des atomes d'yttrium sont remplacés par des atomes de lanthane.

4. Lampe à décharge à vapeur de mercure comprenant au moins deux électrodes pour causer une décharge gazeuse dans un espace clos contenant une charge se composant au moins de mercure, comme additif métallique, et d'un gaz rare, la lampe comprenant de plus un récipient extérieur fermé hermétiquement entourant l'espace de la décharge gazeuse, la surface intérieure du récipient extérieur étant couverte d'une couche de substance luminescente, la substance luminescente formant ladite couche contenant un premier constituant luminescent dans la gamme rouge sous l'effet d'une irradiation optique, et un deuxième constituant luminescent dans la fourchette de 520 à 560 nm sous l'effet d'une irradiation optique, le deuxième constituant étant activé par du cérium trivalent et comprenant un grenat d'yttrium-aluminate de la composition $Y_{3-a}Ce_aAl_5O_{12}$, la lampe étant caractérisée en ce que le deuxième constituant de la substance luminescente contient dans un mélange une première phase du grenat d'yttrium-aluminate avec $0,0003<a<0,1$ et, en une quantité restant au-dessous du double de la première phase, une deuxième phase d'un aluminate de structure cristalline hexagonale de la composition $La_bCe_{1-b}Al_{11}O_{18}$ avec $0<b<1$, la deuxième phase étant présente au moins en une quantité décelable par une analyse radiodiffractométrique.

5. Lampe à décharge à vapeur de mercure selon la revendication 4, caractérisée en ce que le récipient extérieur est réalisé en forme d'un récipient de décharge.

6. Lampe à décharge à vapeur de mercure selon la revendication 4, caractérisée en ce que le récipient extérieur est réalisé en forme d'une ampoule extérieure (1) séparée, par un espace, d'un récipient de décharge absorbant la décharge gazeuse, le premier constituant dans la couche de substance luminescente (2) contenant de l'yttrium-vanadate, ou de l'yttrium-vanadate-phosphate, activé par de l'europium trivalent.

7. Lampe à décharge à vapeur de mercure selon l'une quelconque des revendications 4 à 6, caractérisée en ce que la quantité de la deuxième phase reste au-dessous de la quantité de la première phase de la substance luminescente, les indices a et b étant dans les fourchettes respectives de $0,003<a<0,1$ et $0,1<b<1$.

8. Lampe à décharge à vapeur de mercure selon l'une quelconque des revendications 4 à 7, caractérisée en ce que dans la première phase de la substance luminescente au maximum 1% des atomes d'yttrium sont remplacés par des atomes de lanthane.

9. Lampe à décharge à vapeur de mercure selon l'une quelconque des revendications 6 à 8, caractérisée en ce que dans la substance luminescente la quantité du deuxième constituant est dans la fourchette de 5 à 30 % en poids.

Fig.1

Fig.2

14

Fig.3

Fig.4

Fig. 5